# EUROPÄISCHE PATENTSCHRIFT

(11) **EP 3 209 594 B1**
(45) Veröffentlichungstag und Bekanntmachung des Hinweises auf die Patenterteilung: **29.06.2022**
(21) Anmeldenummer: 15787457.9
(22) Anmeldetag: 20.10.2015
(51) Int. Cl.: B66C 13/12, B60K 17/28, B66C 13/20, B66C 23/86, E02F 9/12

(54) **HYDRAULIKEINHEIT**
HYDRAULIC UNIT
GROUPE HYDRAULIQUE

(30) Priorität: 20.10.2014 DE 202014008340 U; 17.11.2014 DE 202014009106 U
(43) Veröffentlichungstag der Anmeldung: 30.08.2017
(73) Patentinhaber: Liebherr-Components Biberach GmbH, 88400 Biberach/Riß (DE)
(72) Erfinder: HAUSLADEN, Norbert, 88400 Biberach (DE); SCHINDLER, Viktor, 88524 Uttenweiler (DE)
(74) Vertreter: Thoma, Michael
(86) Internationale Anmeldenummer: PCT/EP2015/002074
(87) Internationale Veröffentlichungsnummer: WO 2016/062397

(56) Entgegenhaltungen:
- EP-A2- 0 357 580
- EP-A2- 2 789 488
- DE-A1- 3 102 023
- DE-U1-202005 018 966

## Beschreibung

Die vorliegende Erfindung betrifft eine Hydraulikeinheit mit einem Gehäuse, in dem ein Hydraulikwandler aufgenommen ist, der mit einer Antriebswelle gekoppelt ist, die ein außerhalb des Gehäuses befindliches Anschlusswellenstück zum Anschließen an ein mechanisches Antriebselement aufweist. Die Erfindung betrifft ferner eine hydraulische Antriebsvorrichtung mit einer solchen Hydraulikeinheit sowie einem Antriebsstrang-Anschlussstück, an das die Hydraulikeinheit angeschlossen ist. Aus der DE 31 02 023 A1 ist eine hydrodynamische Verzögerungseinrichtung bekannt, bei der ein hydraulischer Bremsrotor auf einer Welle sitzt, die über eine Kupplung an die Antriebswelle an- und abkuppelbar ist. Der Bremsrotor sowie die genannte Kupplung sind in einem gemeinsamen Gehäuse aufgenommen, während eine Hydraulikpumpe, die den Bremsrotor mit Hydrauliköl versorgt, außerhalb des Gehäuses angeordnet ist und über eine Kettenstufe von der genannten Welle angetrieben wird. Weitere Hydraulikeinheiten zeigen beispielsweise die Schriften EP 0 357 580 A2, DE 20 2005 018 966 U1, EP 2 666 657 A1, DE 10 2012 203 588 A1 und EP 2 789 488 A2.

Bei hydraulischen Antriebssystemen werden Hydraulikeinheiten oft im Leerlauf mitgeschleppt, wenn die mit der jeweiligen Hydraulikeinheit gekoppelte Baugruppe gerade nicht benötigt beziehungsweise nicht betätigt werden muss. Bei einem solchen Mitschleppen der Hydraulikeinheit treten entsprechende Schleppmomente auf, die als Verlustleistung den Gesamtwirkungsgrad des Geräts beziehungsweise der Anlage verschlechtern beziehungsweise den Gesamtenergiebedarf unnötig erhöhen.

Ein solches Mitschleppen von Hydraulikeinheiten tritt beispielsweise bei Antriebsvorrichtungen auf, die als Antriebsstrang-Anschlussstück ein Verteiler- oder Kombinationsgetriebe umfassen, an das mehrere Hydraulik-einheiten angeschlossen werden können. Beispielsweise besitzen Baumaschinen, Krane, Erdbewegungsmaschinen und dergleichen häufig eine Antriebsvorrichtung, bei der ein Verbrennungsmotor beispielsweise in Form eines Dieselmotors oder ein anderer Primärmotor über einen Antriebsstrang ein Pumpenverteilergetriebe antreibt, an das mehrere Hydraulikeinheiten in Form von Pumpen angeschlossen sind, um verschiedene Komponenten des Geräts anzutreiben. Beispielsweise kann eine Hydraulikeinheit ein Hubwerk versorgen, das für das Heben am Kran zuständig ist, während eine andere Hydraulikeinheit mit einem Drehwerk gekoppelt ist, das für das Drehen des Krans zuständig ist. Wird beispielsweise das Drehen früher abgeschlossen als das Heben, läuft die Hydraulikeinheit des Drehwerks im Leerlauf mit, wodurch es zu entsprechenden Planschverlusten beziehungsweise Schleppverlusten kommt. Dies gilt analog auch für Antriebsvorrichtungen mit mehreren Hydraulikmotoren, die an ein Kombinationsgetriebe angeschlossen sind, beispielsweise in Form einer Seilwinde mit Mehrmotorenantrieb, wenn beispielsweise im Teillastbetrieb an sich einer oder mehrere Hydraulikmotoren abgeschaltet werden könnten.

In ähnlicher Weise kann es also allgemein auch bei als Motor genutzten Hydraulikeinheiten zu solchen Schleppverlusten kommen, beispielsweise wenn bei einer Stellbewegung durch einen Stellmotor ein anderer Stellmotor, der beispielsweise für die gegenläufige Stellbewegung zuständig sein kann, mitgeschleppt wird. Insofern wird als Hy-draulikeinheit im Sinne der vorliegenden Anmeldung sowohl eine Pumpe als auch ein Motor verstanden.

Um derartige Schleppverluste zu vermeiden, wurde bereits angedacht, in die mechanischen Antriebsstränge beispielsweise im Bereich der Verteilergetriebe beziehungsweise zwischen dem Verteilergetriebe und der jeweiligen Hydraulikeinheit eine Kupplung vorzusehen, um eine nicht benötigte Hydraulikeinheit vom mechanischen Antriebsstrang abkuppeln zu können. Derartige Kupplungen haben jedoch den Nachteil, dass sie an die jeweilige Anwendung angepasst werden müssen und die Platzverhältnisse im Bereich des mechanischen Antriebsstrangs oft nicht vorhanden sind.

Hiervon ausgehend liegt der vorliegenden Erfindung die Aufgabe zugrunde, eine verbesserte Hydraulikeinheit sowie eine verbesserte hydraulische Antriebsvorrichtung mit einer solchen Hydraulikeinheit zu schaffen, die Nachteile des Standes der Technik vermeiden und letzteren in vorteilhafter Weise weiterbilden. Insbesondere soll die Verlustleistung in Folge von Schleppmomenten von im Leerlauf mitgeschleppten Hydraulikeinheiten vermindert werden, ohne hierfür die Montagefreundlichkeit standardmäßiger Baukastensysteme mit zusammenpassenden Hydraulik-und Mechanikteilen des Antriebsstrangs zu opfern und ohne hierfür Platzprobleme im Bereich der Verteilergetriebe zu schaffen.

Erfindungsgemäß wird die genannte Aufgabe durch eine Hydraulikeinheit gemäß Anspruch 1 sowie eine hydraulische Antriebsvorrichtung gemäß Anspruch 14 gelöst. Bevorzugte Ausgestaltungen der Erfindung sind Gegenstand der abhängigen Ansprüche.

Es wird also vorgeschlagen, eine Kupplung zum Zu- und Abschalten der Hydraulikeinheit in die Hydraulikeinheit selbst zu integrieren, sodass ein mechanischer Antriebsstrang, an den die Hydraulikeinheit angeschlossen wird, unverändert bleiben kann beziehungsweise nicht in spezieller Weise an die Kupplung anzupassen ist. Erfindungsgemäß ist eine Kupplung zum An- und Abkuppeln des Anschlusswellenstücks der Hydraulikeinheit an beziehungsweise von dem Hydraulikwandler der Hydraulikeinheit im Gehäuse der Hydraulikeinheit aufgenommen. Der Anwender kann die Hydraulikeinheit in an sich bekannter Weise verbauen, ohne am mechanischen Antriebsstrang selbst Anpassungen gegenüber herkömmlichen Lösungen vornehmen zu müssen, sodass im Bereich des mechanischen Antriebsstrangs, insbesondere eines Verteilergetriebes, keine Platzprobleme entstehen. Dennoch können Planschverluste durch leer mitlaufende Hydraulikeinheiten beträchtlich reduziert werden, wodurch eine signifikante Reduzierung der Verlustleistung im Leerlauf erzielt werden kann.

Die in das Gehäuse der Hydraulikeinheit integrierte Kupplung kann grundsätzlich in verschiedener Art und Weise betätigt werden. Um eine gute Systemkompatibilität zu erzielen, kann in Weiterbildung der Erfindung die Kupplung hydraulisch betätigbar ausgebildet sein. Hierdurch können an der Hydraulikeinheit an sich schon vorhandene Hydraulikbauteile mitgenutzt und/oder hiermit kompatible hydraulische Betätigungselemente eingesetzt werden, um die Kupplung zum An- und Abkuppeln der Hydraulikeinheit zu betätigen.

Um bei Energieausfall im Sinne eines Notfallbetriebs die Funktion der Hydraulikeinheit sicherzustellen, kann die Kupplung eine energieautarke Vorspannvorrichtung zum Vorspannen der Kupplung in die eingekuppelte Stellung umfassen, sodass die Kupplung bei Energieausfall und/oder Ausfall des mit Fremdenergie versorgten Betätigers in die eingekuppelte Stellung verbracht wird und die Hydraulikeinheit dementsprechend in an sich vorbestimmter Weise über das Anschlusswellenstück an den mechanischen Antriebsstrang angebunden ist. Der Betätiger zum Auskuppeln der Kupplung ist derart ausgebildet, dass er die Vorspannkräfte der genannten Vorspannvorrichtung überwindet und/oder außer Kraft setzt, um die Kupplung entgegen der Vorspannung der Vorspannvorrichtung in die ausgekuppelte Stellung verbringen zu können. Der genannte Betätiger kann dabei vorteilhafterweise ein hydraulischer Betätiger sein, der Hydraulikdruck bereitstellt, welcher die Kupplung in die ausgekuppelte Stellung zu bewegen vermag. Grundsätzlich könnte der genannte Betätiger auch in anderer Weise arbeiten, beispielsweise einen elektroma-gnetischen Aktor umfassen, wobei allerdings die genannte hydraulische Ausbildung des Betätigers in der genannten Weise die Systemkompatibilität verbessert.

Die genannte energieautarke Vorspannvorrichtung kann ebenfalls verschieden ausgebildet sein. Beispielsweise kann ein separater, autarker Hydraulikdruckspeicher vorgesehen sein, der einen hydraulischen Vorspanndruck auf die Kupplung bereitstellt, um die Kupplung in die eingekuppelte Stellung zu verbringen. Alternativ oder zusätzlich kann die Vorspannvorrichtung auch eine andere Federeinrichtung zum Vorspannen der Kupplung in die eingekuppelte Stellung umfassen, wobei die genannte Federeinrichtung beispielsweise eine mechanische Feder umfassen kann.

Um ein einfaches Einkuppeln zu ermöglichen, das unempfindlich gegenüber Relativbewegungen der Kupplungsteile zueinander ist, kann die Kupplung als Lamellenkupplung ausgebildet sein, wobei der genannte Betätiger die Lamellen auseinanderbewegen kann, während die Vorspannvorrichtung die Lamellen reibschlüssig aneinanderdrücken kann.

Alternativ kann die Kupplung auch als Klauenkupplung ausgebildet sein, wodurch eine insbesondere radial sehr klein bauende Kupplung erreicht werden kann. Zudem kommt die Kupplung mit geringen Betätigungskräften aus.

Um aufwendige Drehdurchführungen zwischen Gehäuse und Kupplung beziehungsweise zwischen den Kupplungsteilen zu vermeiden, kann in Weiterbildung der Erfindung der hydraulische Betätiger einen Zufuhrkanal zum Zuführen von Hydrauliköl zum hydraulischen Schalten der Kupplung umfassen, der durch die Antriebswelle der Hydraulikeinheit geführt ist. Insbesondere kann sich der genannte Zufuhrkanal näherungsweise parallel zur Längsachse der Antriebswelle durch diese Antriebswelle hindurch erstrecken, wobei der genannte Zufuhrkanal durch Querkanäle mit der Kupplung und/oder einem Druckanschluss andererseits verbunden sein kann. Der Hydraulikdruck zum Betätigen der Kupplung kann insbesondere durch den sich mit der Antriebswelle mitdrehenden Kupplungsteil zugeführt werden. Hierzu kann der genannte Zufuhrkanal durch die Antriebswelle mit dem genannten mitrotierenden Kupplungsteil strömungsverbunden beziehungsweise einem Zufuhrkanalabschnitt durch den genannten Kupplungsteil strömungsverbunden sein.

Die genannte Antriebswelle kann dabei mehrteilig ausgebildet sein beziehungsweise zwei zueinander verdrehbare Wellenstücke umfassen. Einerseits kann die genannte Antriebswelle das schon genannte außen liegende Anschlusswellenstück umfassen. Andererseits kann die Antriebswelle ein mit dem Hydraulikwandler drehfest verbundenes, im Inneren des Gehäuses angeordnetes inneres Antriebswellenstück aufweisen, das mit dem genannten außen liegenden Anschlusswellenstück durch die genannte Kupplung lösbar drehfest verbindbar ist. Der zuvor genannte Zufuhrkanal kann sich durch das genannte innere Antriebswellenstück erstrecken.

Alternativ zu einer solchen Anordnung der Kupplung zwischen zwei Stücken der Antriebswelle kann die Kupplung grundsätzlich auch zwischen der Antriebswelle und dem Hydraulikwandler angeordnet sein, wobei in einem solchen Fall die Antriebswelle einstückig ausgebildet sein kann, da sie durch die genannte Kupplung direkt mit dem Hydraulikwandler beziehungsweise einem damit verbundenen Wandlerteil angekuppelt werden kann.

Um eine axial kurze Bauweise zu ermöglichen, ist die genannte Kupplung radial außen über der genannten Antriebswelle angeordnet, insbesondere über dem zuvor genannten inneren Antriebswellenstück und dem Anschlusswellenstück, welches einen sich außerhalb des Gehäuses erstreckenden Abschnitt umfasst. Durch eine solche radial nach außen gesetzte Anordnung der Kupplung kann sich ein Stück der Antriebswelle durch die Kupplung hindurch erstrecken, sodass die axiale Baulänge kaum länger wird als bei einer Hydraulikeinheit ohne integrierte Kupplung. Wenn es indes auf die axiale Baulänge der Hydraulikeinheit nicht so sehr ankommt, kann die genannte Kupplung jedoch auch stirnseitig zwischen zwei Wellenstücken der Antriebswelle angeordnet sein und sozusagen den Spalt zwischen den Wellenstücken überbrücken.

Gemäß der Erfindung dient das Gehäuse der Hydraulikeinheit gleichzeitig als Kupplungsgehäuse. Hierbei besitzt das Gehäuse der Hydraulikeinheit eine Kupplungskammer, in der die Kupplung aufgenommen ist und die zu einer Gehäuseaußenseite hin verschlossen ist, sodass die Kupplung geschützt im Inneren des Gehäuses aufgenommen ist, ferner umfasst das Gehäuse ein Hydraulikwandler.

Insbesondere kann das Gehäuse der Hydraulikeinheit ein Mehrkammersystem besitzen und/oder in mehrere Unterkammern unterteilt ausgebildet sein. Vorteilhafterweise kann das Gehäuse zusätzlich zu der genannten Kupplungskammer eine Wandlerkammer umfassen, in der der Hydraulikwandler aufgenommen ist, wobei vorteilhafterweise die Wandler- und Kupplungskammern voneinander durch zumindest eine Gehäusewand abgetrennt sein können. Je nach benötigter Dichtigkeit der einzelnen Kammern kann zwischen den Kupplungs- und Wandlerkammern dabei eine Öldichtung vorgesehen sein. Beispielsweise kann die genannte Gehäusewand, die sich zwischen Kupplungskammer und Wandlerkammer erstreckt, mittels einer Dichtung gegenüber der Antriebswelle abgedichtet sein, die sich durch die Gehäusewand hindurch erstrecken kann.

Die Kupplungskammer ist zudem auch zur Außenseite des Gehäuses mittels einer Dichtung abgedichtet. Beispielsweise kann das Gehäuse einen Gehäusedeckel umfassen, der die Kupplungskammer stirnseitig begrenzt und durch den sich das Anschlusswellenstück hindurch erstrecken kann. Eine Dichtung kann hierbei den genannten Deckel gegenüber dem genannten Anschlusswellenstück abdichten.

Die genannte Antriebswelle kann vorteilhafterweise am Gehäuse drehbar abgestützt beziehungsweise gelagert sein, wobei ein entsprechendes Drehlager vorteilhafterweise zwischen dem Hydraulikwandler und der genannten Kupplung vorgesehen sein kann. Beispielsweise kann das genannte Drehlager die Antriebswelle gegenüber der Gehäusewand abstützen, die die Kupplungskammer von der Wandlerkammer trennt.

In Weiterbildung der Erfindung kann der Kupplung eine Überwachungsvorrichtung zugeordnet sein, um den Eingriffszustand der Kupplung zu überwachen, insbesondere zu bestimmen, ob die Kupplung in der eingekuppelten oder ausgekuppelten Stellung ist. Die Kupplungsstellung kann hierbei grundsätzlich in verschiedener Art und Weise überwacht bzw. bestimmt werden, wobei die Überwachungsvorrichtung vorteilhafterweise elektronisch arbeitend ausgebildet sein kann. Insbesondere kann die Überwachungsvorrichtung einen Stellungssensor umfassen, der die Stellung eines beweglichen Kupplungsteils erfasst, insbesondere ob sich das genannte Kupplungsteil in einer ausgekuppelten oder einer eingekuppelten Stellung befindet. Alternativ oder zusätzlich zu einem solchen Positionssensor kann die Überwachungsvorrichtung auch einen Drucksensor umfassen, der den Betätigungsdruck erfasst, mit dem die Kupplung hydraulisch betätigt wird. Wird die Kupplung beispielsweise wie zuvor erläutert durch eine Federeinrichtung in die eingekuppelte Stellung vorgespannt und durch Hydraulikdruck ausgekuppelt, kann bei Erreichen oder Überschreiten eines vorbestimmten Drucks davon ausgegangen werden, dass die Kupplung ausgekuppelt ist, während bei Nicht-Erreichen des vorbestimmten Drucks oder auch eines anderen vorbestimmten, beispielsweise niedrigeren Drucks, d.h. wenn der Betätigungsdruck unter einem vorbestimmten Wert bleibt, davon ausgegangen werden kann, dass die Kupplung aufgrund der Federvorspannung eingekuppelt ist.

In vorteilhafter Weiterbildung der Erfindung kann die Überwachungsvorrichtung auch redundant arbeitend ausgebildet sein und zwei voneinander unabhängig wirkende Überwachungsmittel umfassen, beispielsweise den vorgenannten Positionssensor und den vorgenannten Drucksensor.

Der genannte Hydraulikwandler wandelt hydraulische Energie in mechanische Energie und/oder umgekehrt mechanische Energie in hydraulische Energie. Beispielsweise kann der genannte Hydraulikwandler ein Pumpenrotor nach Art eines Schaufelrades sein. Selbstverständlich sind jedoch auch andere Wandlerausbildungen möglich. Beispielsweise kann die Hydraulikeinheit als Schrägscheibenpumpe und/oder Schrägscheibenmotor mit verstellbarem Schluckvolumen umfassen. Je nach Systemanforderungen können verschiedene Wandlerausbildungen vorgesehen sein.

Die Erfindung wird nachfolgend anhand eines bevorzugten Ausführungsbeispiels und zugehöriger Zeichnungen näher erläutert. In den Zeichnungen zeigen:
- Fig. 1:: eine teilweise geschnittene Seitenansicht eines Verteilergetriebes mit daran angeflanschten Hydraulikeinheiten einer hydraulischen Antriebsvorrichtung, wobei eine in der Darstellung der Fig. 1 untere Hydraulikeinheit eine integrierte Kupplung zum An- und Abkuppeln der Hydraulikeinheit aufweist, während die gemäß Fig. 1 obere Hydraulikeinheit in herkömmlicher Weise ohne eine solche Kupplung ausgebildet ist,
- Fig. 2:: einen Längsschnitt durch die Hydraulikeinheit aus Fig. 1, die die integrierte Kupplung aufweist, und
- Fig. 3:: eine ausschnittsweise Längsschnittdarstellung einer als Klauenkupplung ausgebildeten Kupplung, der eine Überwachungsvorrichtung zum Überwachen der Kupplungsstellung zugeordnet ist.

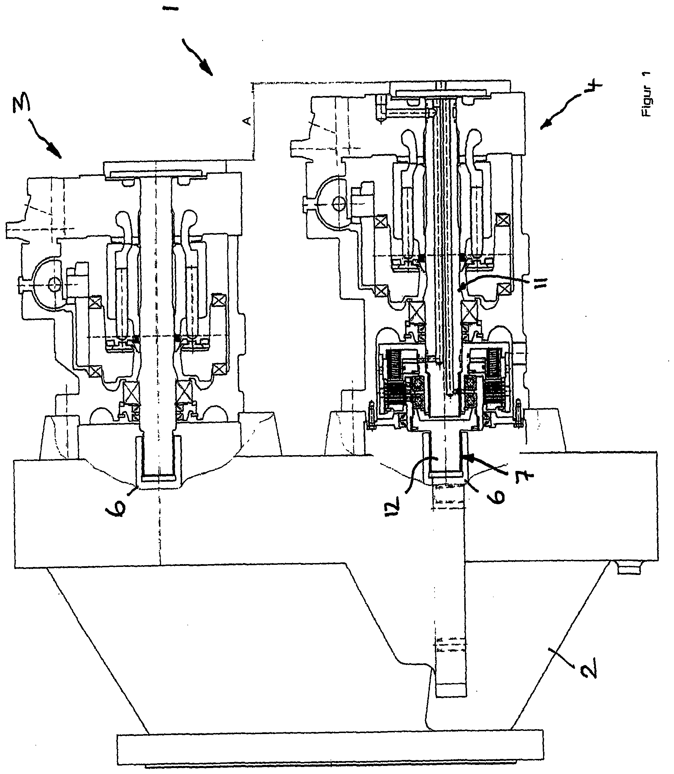

Wie Fig. 1 zeigt, kann die hydraulische Antriebsvorrichtung 1 ein Verteilergetriebe 2 umfassen, an dem mehrere Hydraulikeinheiten 3 und 4 angebunden sind, wobei die genannten Hydraulikeinheiten 3 und 4 beispielsweise Pumpen bilden können, um Hydraulikdruck zum Antreiben von verschiedenen Aggregaten bereitzustellen, die in den Figuren nicht eigens gezeigt sind. Solche Aggregate können beispielsweise Hubwerke, Drehwerke oder Wippwerke von Kranen, Stellantriebe von Muldenkippern, Trommelantriebe und Hubwerke von Mischern oder andere Antriebsbaugruppen anderer Geräte sein, die mittels Hydraulikdruck betreibbar sind. Alternativ könnten die mehreren Hydraulikeinheiten 3 und 4 aber auch an ein Kombinationsgetriebe oder ein Antriebsstrang-Anschlussstück eines Mehrmotorenantriebs beispielsweise einer Winde angeschlossen sein, wobei die Hydraulikeinheiten 3 und 4 in diesem Fall als Hydraulikmotoren arbeiten würden.

Das genannte Verteilergetriebe 2 kann eingangsseitig über einen mechanischen Antriebsstrang angetrieben sein, beispielsweise von einem Verbrennungsmotor her, der über ein geeignetes Getriebe beziehungsweise einen geeigneten Antriebsstrang mit dem Verteilergetriebe 2 verbunden sein kann. Alternativ wäre es jedoch auch möglich, das genannte Verteilergetriebe 2 selbst eingangsseitig auch hydraulisch oder gegebenenfalls auch elektrisch anzutreiben, um dem jeweiligen Antriebskonzept gerecht zu werden.

Das Verteilergetriebe 2 verteilt die eingangsseitig eingebrachte Eingangsleistung auf mehrere Abtriebswellen, über die die Antriebswellen der genannten Hydraulikeinheiten 3 und 4 angetrieben werden. Wie Fig. 1 zeigt, können die Hydraulikeinheiten 3 und 4 hierzu an dem Verteilergetriebe 2 angeflanscht sein, sodass aus den Hydraulikeinheiten 3 und 4 stirnseitig herausstehende Anschlusswellenstücke 5 mit Ausgangswellen 6 des Verteilergetriebes 2 in drehfesten Eingriff gebracht werden können, beispielsweise über eine Muffen- beziehungsweise Keilwellenverbindung 7 oder ein anderes geeignetes Anschlussstück, das eine drehfeste Verbindung mit der jeweiligen Ausgangswelle 6 des Verteilergetriebes 2 sicherstellt. Die Anschlussmaße der Anschlussstücke des Verteilergetriebes 2 sowie andererseits die Anschlussmaße der mehreren Hydraulikeinheiten 3 und 4 können einander entsprechen und jeweils gleich konturiert beziehungsweise konfiguriert sein, sodass die Hydraulikeinheiten 3 und 4 nach dem Baukastenprinzip an verschiedenen Anschlussstellen des Verteilergetriebes 2 angebaut werden können.

Die in Fig. 1 gezeigte obere Hydraulikeinheit 3 ist eine an sich herkömmliche Hydraulikeinheit ohne integrierte Kupplung zum An- und Abkuppeln und ist im Wesentlichen zu Vergleichszwecken und zur Verdeutlichung dargestellt, dass an dem Verteilergetriebe 2 gleichermaßen herkömmliche Hydraulikeinheiten ohne integrierte Kupplung als auch eben Hydraulikeinheiten mit integrierter Kupplung angebaut werden können und miteinander ausgetauscht werden können.

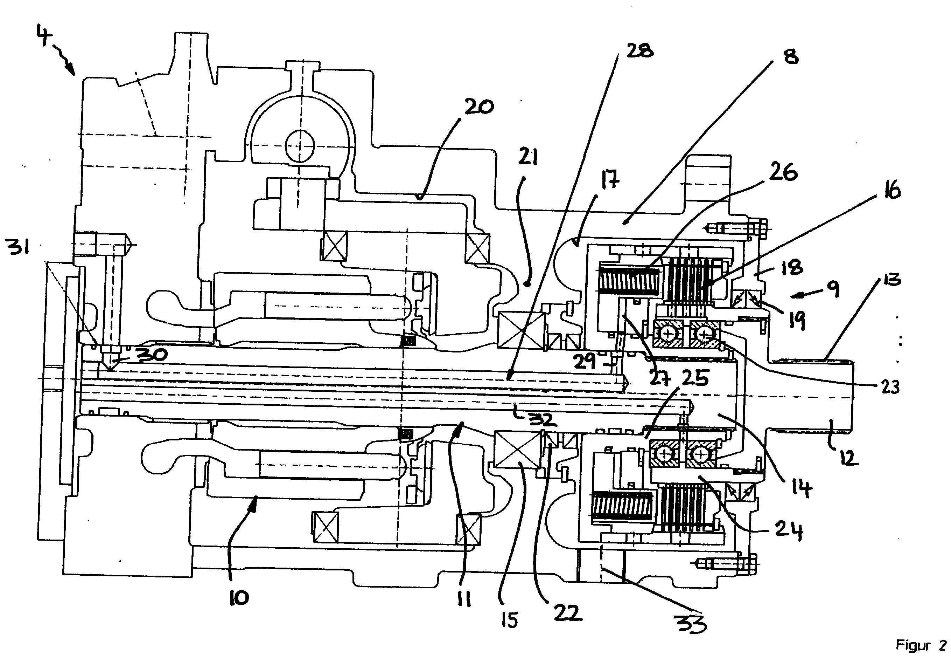

Die in Fig. 1 gezeigte untere Hydraulikeinheit 4 ist in Fig. 2 näher dargestellt und besitzt ein Gehäuse 8, das eine in der genannten Weise an die Anschlussstücke des Verteilergetriebes 2 angepasste Stirnseite 9 besitzt, um am Verteilergetriebe 2 angeflanscht beziehungsweise in anderer Weise angebracht zu werden.

Die Hydraulikeinheit 4 besitzt dabei einen in dem Gehäuse 8 untergebrachten Hydraulikwandler 10, der die vom Verteilergetriebe 2 her eingeleitete mechanische Energie in hydraulische Energie umwandelt. Beispielsweise kann der genannte Hydraulikwandler 10 eine Pumpenstufe umfassen, die beispielsweise ein Schaufelrad oder insbesondere auch eine Schrägscheiben-Kolbenpumpenanordnung umfassen kann. Der genannte Hydraulikwandler 10 wird hierbei von einer Antriebswelle 11 angetrieben, die an dem Gehäuse 8 drehbar gelagert ist und mit dem genannten Hydraulikwandler 10 drehfest verbunden ist. Die genannte Antriebswelle 11 kann sich hierbei teilweise in dem Gehäuse 8 erstrecken und einen aus der genannten Stirnseite 9 des Gehäuses 8 austretenden Abschnitt in Form eines Anschlusswellenstücks 12 umfassen, das an die Ausgangswelle 6 des Verteilergetriebes 2 angebunden werden kann. Wie Fig. 2 zeigt, kann das Anschlusswellenstück 12 hierzu eine Keilwellenprofilierung 13 umfassen.

Die Antriebswelle 11 der Hydraulikeinheit 4 ist dabei - im Gegensatz zur Antriebswelle der Hydraulikeinheit 3 - nicht einstückig ausgebildet und durchgängig bis zum Anschlusswellenstück 12 ausgeformt, sondern zweiteilig beziehungsweise mehrteilig ausgebildet. Insbesondere kann die Antriebswelle 11 ein im Gehäuse 8 aufgenommenes inneres Antriebswellenstück 14 umfassen, das mit dem Hydraulikwandler 10 drehfest verbunden ist und im Inneren des Gehäuses 8 am Gehäuse 8 drehfest abgestützt ist, beispielsweise durch das in Fig. 2 gezeigte Drehlager 15.

Mit dem aus dem Gehäuse 8 austretenden Anschlusswellenstück 12 ist das genannte innere Antriebswellenstück 14 über eine Kupplung 16 lösbar drehmomentübertragend verbindbar, um die Antriebsbewegung des Anschlusswellenstücks 12 wahlweise auf das innere Antriebswellenstück 14 übertragen oder nicht übertragen zu können. Mittels der genannten Kupplung 16 ist der Hydraulikwandler 10 von dem Anschlusswellenstück 12 an- und abkuppelbar.

Wie Fig. 2 zeigt, kann das innere Antriebswellenstück 14 parallel, insbesondere auch koaxial zu dem Anschlusswellenstück 12 angeordnet sein. Bei nur paralleler Anordnung mit einem Versatz zwischen den Wellenachsen könnte eine Stirnradstufe zwischengeschaltet sein, während bei koaxialer Anordnung der beiden Anschluss- und Antriebswellenstücke 12 und 14 eine Verbindung über die Kupplung 16 ohne Zwischenschaltung von weiteren Getriebeelementen wie Zahnradstufen und dergleichen möglich ist. Insbesondere kann durch die Kupplung 16 ein direkter Kraftfluss zwischen dem inneren Antriebswellenstück 14 und dem Anschlusswellenstück 12 erreicht werden.

Die genannte Kupplung 16 kann vorteilhafterweise zwischen dem Hydraulikwandler 10 und dem Anschlusswellenstück 12, insbesondere benachbart zu der Stirnseite 9 angeordnet sein, mit der die Hydraulikeinheit 4 an das Verteilergetriebe 2 anflanschbar ist. Die Kupplung 16 ist dabei im Gehäuse 8 mit aufgenommen, sodass die Kupplung 16 in die Hydraulikeinheit 4 integriert ist. Von der Außenseite her ist der Hydraulikeinheit an sich nicht ansehbar, dass das Anschlusswellenstück 12 vom Hydraulikwandler 10 an- und abkuppelbar ist. Wie Fig. 1 zeigt, ergibt sich lediglich eine um das Maß A geringfügig vergrößerte axiale Baulänge.

Die genannte Kupplung 16 ist in einer Kupplungskammer 17 des Gehäuses 8 aufgenommen, die zur Außenumgebung hin verschlossen ist, beispielsweise durch eine Umfangswandung 8u des Gehäuses 8 sowie einen stirnseitigen, lösbaren Gehäusedeckel 18, durch den Anschlusswellenstück 12 hindurchgeführt ist. Wie Fig. 2 zeigt, ist das Gehäuse 8, insbesondere der Gehäuse-deckel 18 gegenüber der durchgeführten Anschlusswelle 12 durch eine Dichtung 19 abgedichtet, insbesondere hydraulikfluiddicht abgedichtet. Die Kupplungskammer 17 ist insofern zur Umgebung hin abgedichtet.

Die genannte Kupplungskammer 17 kann dabei vorteilhafterweise gegenüber einer Wandlerkammer 20, in der der Hydraulikwandler 10 aufgenommen ist, abgegrenzt sein, insbesondere durch eine sich quer zur Längsrichtung der Antriebswelle 11 erstreckende Gehäusewand 21, die den Innenraum des Gehäuses 8 in mehrere Kammern unterteilt. Die zuvor genannte Antriebswelle 11 kann an der genannten Gehäusewand 21 durch das genannte Drehlager 15 abgestützt sein. Zusätzlich kann eine Dichtung 22 die beiden Kupplungs- und Wandlerkammern 17 und 20 voneinander abdichten, wobei gegebenenfalls jedoch auch eine nicht abgedichtete Ausbildung möglich wäre.

Wie Fig. 2 zeigt, kann das Anschlusswellenstück 12 an dem inneren Antriebswellenstück 14 mittels einer Wälzlagerung 23 drehbar abgestützt beziehungsweise daran gelagert sein, wobei die Wälzlagerung 23 zwischen entsprechenden Kupplungsteilen vorgesehen sein kann, die einerseits die an das innere Antriebswellenstück 14 und andererseits an das Anschlusswellenstück 12 angebunden sind.

Wie Fig. 2 zeigt, kann die Kupplung 16 dabei radial außerhalb beziehungsweise über den Anschluss- und Antriebswellenstücken 12 und 14 angeordnet sein. Die genannten Antriebs- und Anschlusswellenstücke 14 und 12 können dabei einander topfartig übergreifen, beispielsweise kann das Anschlusswellenstück 12 mit einem ring- beziehungsweise hülsenförmigen Kupplungsstück 24 verbunden sein, das das Antriebswellenstück 14 umgreift. Mit dem genannten inneren Antriebswellenstück 14 kann dabei ein weiteres Kupplungsstück 25 drehfest verbunden sein, sodass die beiden Kupplungsstücke 24 und 25 an sich zueinander verdrehbar sind, insbesondere über die Wälzlagerung 23 drehbar aneinander abgestützt sind, wobei die Drehbarkeit natürlich nur im ausgekuppelten Zustand der Kupplung 16 gegeben ist.

Die genannte Kupplung 16 kann dabei grundsätzlich verschieden ausgebildet sein, beispielsweise in Form einer Lamellenkupplung, um auch bei Relativdrehungen oder in verschieden verdrehten Stellungen zueinander eingekuppelt werden zu können.

Die Kupplung 16 umfasst hierbei vorteilhafterweise eine Vorspannvorrichtung 26, mittels derer die Kupplung in die eingekuppelte Stellung vorgespannt ist. Insbesondere kann die Vorspannvorrichtung 26 eine oder mehrere Federn 27 umfassen, mittels derer die Lamellen beziehungsweise die Eingriffselemente der Kupplung aneinandergedrückt werden.

Um die Kupplung 16 auskuppeln zu können, ist ein Betätiger 27 vorgesehen, der vorteilhafterweise hydraulisch arbeitend ausgebildet sein kann. Insbesondere kann durch Einleiten von Hydraulikdruck in eine Stellkammer der Kupplung 16, die sich zwischen den beiden Kupplungsteilen 24 und 25 befindet, die Vorspannung der Vorspannvorrichtung 16 überwunden und die Lamellen voneinander gelöst werden beziehungsweise soweit entlastet, dass sie durchrutschen können.

Der hydraulische Betätiger 27 kann hierbei vorteilhafterweise eine Zufuhrleitung 28 umfassen, die sich durch die Antriebswelle 11, insbesondere das innere Antriebswellenstück 14, hindurch erstrecken kann. Die genannte Zufuhrleitung 28 kann sich hierbei insbesondere parallel zur Längsachse der Antriebswelle 11 erstrecken und auch durch den Hydraulikwandler 10 hindurchführen. Im Bereich der Kupplung 16 kann die Zufuhrleitung 28 mittels eines Querkanals 29 mit der genannten Kupplungs-Betätigungskammer der Kupplung 16 verbunden sein. Am anderen Ende kann die Zufuhrleitung 28 ebenfalls über einen Querkanal 30 beispielsweise an eine Drehdurchführung 31 angebunden sein, um den Betätigungsdruck zum An- und Abkuppeln beziehungsweise zum Betätigen der Kupplung 16 zuführen zu können.

Wie Fig. 2 zeigt, kann durch das innere Antriebswellenstück 14 vorteilhafterweise auch eine Schmieröl-Versorgungsleitung 32 geführt sein, die zu der Wälzlagerung 23 führt, mittels derer die beiden Kupplungsteile 24 und 25 beziehungsweise das Anschlusswellenstück 12 und das innere Antriebswellenstück 14 zueinander drehbar gelagert sind. Die genannte Versorgungsleitung 32 kann sich hierbei ebenfalls in Längsrichtung durch die Antriebswelle 11 erstrecken und an ihrem der Kupplung 16 abgewandten Ende in geeigneter Weise an ein Schmierölreservoir angebunden sein.

Die Kupplungskammer 17 kann als Trockenkammer beziehungsweise so genanntes "Dry Case" ausgebildet sein, wobei in diesem Fall ein Ablaufkanal 33 an der Unterseite der Kupplungskammer 17 vorgesehen sein kann, vgl. Fig. 2. Alternativ zu einer solchen Dry Case-Ausführung kann die Kupplung 16 jedoch auch mit einer Ölsumpfschmierung ausgeführt sein, wobei auch hier eine dann verschließbare Ablaufbohrung beziehungsweise ein entsprechender Ablaufkanal 33 zum Ablassen und Wechseln des Ölsumpfs vorgesehen sein kann.

Mit Hilfe der integrierten Kupplung 16 kann die Hydraulikeinheit 4 wesentlich energieeffizienter betrieben werden, wobei insbesondere Plansch- und Schleppverluste im Leerlauf bei nicht benötigter Hydraulikeinheit vermieden werden können. Wird beispielsweise das von der Hydraulikeinheit 4 angetriebene Aggregat gerade nicht benötigt, muss die Hydraulikeinheit 4 nicht im Leerlauf mitgeschleppt werden. Die Kupplung 16 wird hierbei durch Druckbeaufschlagung über den Betätiger 27 abgekuppelt, sodass sich zwar das Anschlusswellenstück 12 mit der Ausgangswelle 6 des Verteilergetriebes 2 mitdrehen kann, hierbei jedoch der Hydraulikwandler 10 nicht mitgenommen wird. Wird indes die Hydraulikeinheit 4 wieder benötigt, wird die Kupplung 16 über den Betätiger 27 umgeschaltet, das heißt in die Ankuppelstellung verbracht, sodass die Antriebsbewegung des Anschlusswellenstücks 12 wieder auf den Hydraulikwandler 10 übertragen wird. Hierzu kann beispielsweise der Hydraulikdruck des Betätigers 27 zurückgefahren oder abgeschaltet werden, sodass die Vorspannvorrichtung 26 die Lamellen der Kupplung 16 wieder zusammendrückt.

Mit Hilfe der genannten Vorspannvorrichtung 26 kann auch bei einem Systemdruckausfall sichergestellt werden, dass die Hydraulikeinheit 4 wieder mitläuft und ihre Aufgaben erfüllen kann.

Durch die Abschaltbarkeit der Hydraulikeinheit 4 mit Hilfe der integrierten Kupplung 16 können beträchtliche Energieeinsparungen erzielt werden, wobei durch die Integration der Kupplung 16 in die Hydraulikeinheit 4 keine besonderen Maßnahmen am mechanischen Verteilergetriebe 2 notwendig sind. Auch für den Anwender beziehungsweise den Wartungsmonteur ergeben sich Vorteile, da beim Einbau der Hydraulikeinheit 4 an sich nichts Spezielles zu beachten ist und auch ein Austausch mit herkömmlichen Hydraulikeinheiten 3 ohne Kupplung möglich ist.

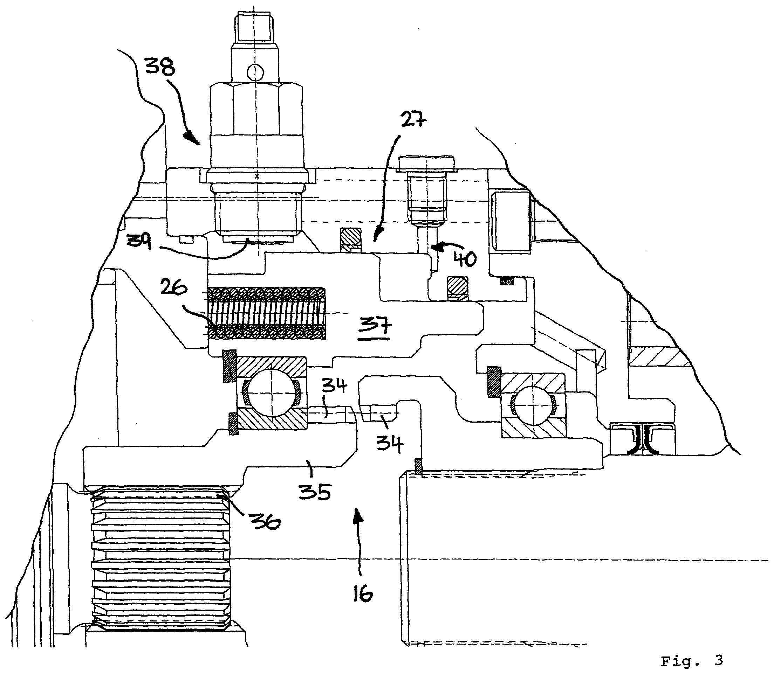

Wie Fig. 3 zeigt, kann die Kupplung 16 auch als Klauenkupplung ausgebildet sein, deren Klauen 34 beispielsweise nach Art eines Keilwellenprofils ausgebildet und/oder durch axiales Verschieben parallel zur Antriebswellenlängsrichtung miteinander in Eingriff und voneinander außer Eingriff gebracht werden können. Ein verschiebliches Klauenteil 35 kann beispielsweise verschieblich, jedoch drehfest auf einem Wellenstück angeordnet sein, wobei hier beispielsweise ein Keilwellenprofil 36 die Verschieblichkeit ermöglichen kann, vgl. Fig. 3.

Der Betätiger 27 zum Betätigen des verschieblichen Klauenteils 35 kann einen Betätigerkolben 37 aufweisen, der einerseits durch eine Vorspannvorrichtung 26 in Form einer Federeinrichtung in die einkuppelnde Stellung vorgespannt sein kann und durch hydraulische Betätigung entgegen der Vorspannvorrichtung 26 in die ausgekuppelte Stellung verbracht werden kann, die in Fig. 3 gezeigt ist.

Um den Kupplungszustand der Kupplung 16 zu überwachen, kann eine Überwachungsvorrichtung 38 zum Überwachen der Stellung der Kupplung einen Positionssensor 39 aufweisen, der die Stellung des verschieblichen Kupplungsteils bzw. Klauenteils 35 und/oder die Stellung des Betätigungskolbens 37 überwachen kann. Wie Fig. 3 zeigt, kann beispielsweise der Betätigungskolben 37 einen Absatz aufweisen, dessen Stellung vom Positionssensor 39 erfassbar ist.

Alternativ oder zusätzlich zu einem solchen Positionssensor 39 kann die Überwachungsvorrichtung 38 auch einen Drucksensor 40 besitzen, der den Betätigungsdruck für die hydraulische Betätigung der Kupplung 16 überwacht bzw. erfasst.

Vorteilhafterweise kann die Überwachungsvorrichtung 38 sowohl die Stellung des beweglichen Kupplungsteils als auch den hydraulischen Betätigungsdruck überwachen und entsprechend redundant ausgebildet sein.

## Patentansprüche

1. Hydraulikeinheit in Form einer Hydraulikpumpe oder eines Hydraulikmotors, mit einem Gehäuse (8), in dem ein Hydraulikwandler (10) in Form einer Pumpenstufe oder einer Motorstufe aufgenommen ist, der mit einer Antriebswelle (11) gekoppelt ist, die ein außerhalb des Gehäuses (8) befindliches Anschlusswellenstück (12) zum Anschließen an ein mechanisches Antriebselement (6) aufweist, wobei im Gehäuse (8) eine Kupplung (16) zum An- und Abkuppeln des Anschlusswellenstücks (12) an/von dem Hydraulikwandler (10) vorgesehen ist, wobei das Gehäuse (8) eine Kupplungskammer (17) besitzt, in der die Kupplung (16) aufgenommen ist und die zu einer Gehäuseaußenseite hin verschlossen und mittels einer Dichtung (19) abgedichtet ist, und wobei das Anschlusswellenstück (12) koaxial zum inneren Antriebswellenstück (14) angeordnet ist und dieses topfartig übergreift,
**dadurch gekennzeichnet,**
**dass** die Kupplung (16) radial außen über dem Antriebswellenstück (14) und über dem Anschlusswellenstück (12) angeordnet ist.

2. Hydraulikeinheit nach dem vorhergehenden Anspruch, wobei die Kupplung (16) hydraulisch betätigbar ausgebildet ist.

3. Hydraulikeinheit nach einem der vorhergehenden Ansprüche, wobei die Kupplung (16) eine energieautarke Vorspannvorrichtung (26) zum Vorspannen der Kupplung (16) in die eingekuppelte Stellung sowie einen Betätiger (27) zum Verbringen der Kupplung (16) in die ausgekuppelte Stellung entgegen der Vorspannung der Vorspannvorrichtung (26) aufweist.

4. Hydraulikeinheit nach einem der vorhergehenden Ansprüche, wobei die Antriebswelle (11) einen Zufuhrkanal (28) zum Zuführen von Hydrauliköl zum hydraulischen Schalten der Kupplung (16) aufweist.

5. Hydraulikeinheit nach einem der vorhergehenden Ansprüche, wobei die Antriebswelle (11) ein mit dem Hydraulikwandler (10) drehfest verbundenes, im Innenraum des Gehäuses (8) angeordnetes inneres Antriebswellenstück (14) aufweist, das mit dem Anschlusswellenstück (12) durch die Kupplung (16) lösbar drehfest verbindbar ist.

6. Hydraulikeinheit nach einem der vorhergehenden Ansprüche, wobei das Gehäuse (8) zusätzlich zu der Kupplungskammer (17) eine Wandlerkammer (20) umfasst, in der der Hydraulikwandler (10) aufgenommen ist, wobei die Wandler- und Kupplungskammern (20, 17) von einander durch zumindest eine Gehäusewand (21) abgetrennt sind.

7. Hydraulikeinheit nach einem der vorhergehenden Ansprüche, wobei die Antriebswelle (11) am Gehäuse (8) drehbar gelagert ist, wobei ein Lager (15) zwischen dem Hydraulikwandler (10) und der Kupplung (16) vorgesehen ist.

8. Hydraulikeinheit nach den beiden vorhergehenden Ansprüchen, wobei das Lager (15) die Antriebswelle (11) an der Gehäusewand (21), die die Kupplungs- und Wandlerkammern (17, 20) voneinander trennt, abstützt.

9. Hydraulikeinheit nach einem der vorhergehenden Ansprüche, wobei die Kupplung (16) als Lamellenkupplung ausgebildet ist.

10. Hydraulikeinheit nach einem der Ansprüche 1-8, wobei die Kupplung (16) als Klauenkupplung ausgebildet ist.

11. Hydraulikeinheit nach einem der vorhergehenden Ansprüche, wobei die Kupplung (16) zwei Kupplungsteile (24, 25) umfasst, die zueinander durch eine Wälzlagerung (23) drehbar gelagert sind, wobei ein Schmiermittel-Versorgungskanal (32) zur Schmiermittelversorgung der Wälzlagerung (23) durch die Antriebswelle (11) geführt ist.

12. Hydraulikeinheit nach dem vorhergehenden Anspruch, wobei das Anschlusswellenstück (12) durch die genannte Wälzlagerung (23) an dem inneren Antriebswellenstück (14) drehbar gelagert ist.

13. Hydraulikeinheit nach einem der vorhergehenden Ansprüche, wobei eine Überwachungsvorrichtung (38) zum Überwachen der Stellung der Kupplung (16) vorgesehen ist, wobei die Überwachungsvorrichtung (38) vorzugsweise einen Positionssensor (39) zum Erfassen der Position eines beweglichen Kupplungsteils (37) und/oder einen Drucksensor (40) zum Erfassen eines Kupplungs-Betätigungsdrucks aufweist und/oder redundant arbeitend ausgebildet ist.

14. Hydraulische Antriebsvorrichtung umfassend zumindest eine Hydraulikeinheit (4) gemäß einem der vorhergehenden Ansprüche, sowie ferner ein Verteilergetriebe (2), an das die zumindest eine Hydraulikeinheit (4) angeschlossen ist.

## Claims

1. A hydraulic unit in the form of a hydraulic pump or a hydraulic motor, comprising a housing (8) in which a hydraulic converter (10) in the form of a pump stage or a motor stage is accommodated, which is coupled to a drive shaft (11) that includes a connecting shaft piece (12) located outside the housing (8) for connection to a mechanical drive element (6), wherein a clutch (16) is provided in the housing (8) for coupling and decoupling the connecting shaft piece (12) to/from the hydraulic converter (10), wherein the housing (8) has a clutch chamber (17) in which the clutch (16) is accommodated and which is closed towards a housing outer side and sealed by means of a seal (19), and wherein the connecting shaft piece (12) is arranged coaxially to the inner drive shaft piece (14) and engages over the same in a pot-like manner, **characterized in**
**that** the clutch (16) is arranged radially on the outside above the drive shaft piece (14) and above the connecting shaft piece (12).

2. The hydraulic unit according to the preceding claim, wherein the clutch (16) is formed to be actuatable hydraulically.

3. The hydraulic unit according to any of the preceding claims, wherein the clutch (16) includes an energy-autarkical pretensioning device (26) for pretensioning the clutch (16) into the engaged position and an actuator (27) for moving the clutch (16) into the disengaged position against the pretension of the pretensioning device (26).

4. The hydraulic unit according to any of the preceding claims, wherein the drive shaft (11) includes a supply channel (28) for supplying hydraulic oil for hydraulically switching the clutch (16).

5. The hydraulic unit according to any of the preceding claims, wherein the drive shaft (11) includes an inner drive shaft piece (14) arranged in the interior space of the housing (8), which is non-rotatably connected with the hydraulic converter (10) and is releasably non-rotatably connectable with the connecting shaft piece (12) by the clutch (16).

6. The hydraulic unit according to any of the preceding claims, wherein in addition to the clutch chamber (17) the housing (8) comprises a converter chamber (20) in which the hydraulic converter (10) is accommodated, wherein the converter and clutch chambers (20, 17) are separated from each other by at least one housing wall (21).

7. The hydraulic unit according to any of the preceding claims, wherein the drive shaft (11) is rotatably mounted on the housing (8), wherein a bearing (15) is provided between the hydraulic converter (10) and the clutch (16).

8. The hydraulic unit according to the two preceding claims, wherein the bearing (15) supports the drive shaft (11) on the housing wall (21) which separates the clutch and converter chambers (17, 20) from each other.

9. The hydraulic unit according to the any of the preceding claims, wherein the clutch (16) is formed as multidisk clutch.

10. The hydraulic unit according to the any of claims 1-8, wherein the clutch (16) is formed as claw clutch.

11. The hydraulic unit according to any of the preceding claims, wherein the clutch (16) comprises two clutch parts (24, 25) which are rotatably mounted relative to each other by an anti-friction bearing (23), wherein a lubricant supply channel (32) for supplying lubricant to the anti-friction bearing (23) is guided through the drive shaft (11).

12. The hydraulic unit according to the preceding claim, wherein the connecting shaft piece (12) is rotatably mounted on the inner drive shaft piece (14) by said anti-friction bearing (23).

13. The hydraulic unit according to any of the preceding claims, wherein a monitoring device (38) is provided for monitoring the position of the clutch (16), wherein the monitoring device (38) preferably includes a position sensor (39) for detecting the position of a movable clutch part (37) and/or a pressure sensor (40) for detecting a clutch actuating pressure and/or is formed to operate redundantly.

14. A hydraulic driving device comprising at least one hydraulic unit (4) according to any of the preceding claims, and furthermore a transfer gear (2) to which the at least one hydraulic unit (4) is connected.

## Revendications

1. Groupe hydraulique sous la forme d'une pompe hydraulique ou d'un moteur hydraulique, comprenant un boîtier (8) dans lequel est logé un convertisseur hydraulique (10) sous la forme d'un étage de pompe ou d'un étage de moteur, qui est couplé à un arbre d'entraînement (11) qui présente un bout d'arbre de raccordement (12) se trouvant à l'extérieur du boîtier (8) pour le raccordement à un élément d'entraînement mécanique (6), dans lequel un embrayage (16) est prévu dans le boîtier (8) pour l'accouplement et le désaccouplement du bout d'arbre de raccordement (12) au/du convertisseur hydraulique (10), dans lequel le boîtier (8) possède une chambre d'embrayage (17) dans laquelle est logé l'embrayage (16) et qui est fermée vers un côté extérieur du boîtier et rendue étanche au moyen d'un joint (19), et dans lequel le bout d'arbre de raccordement (12) est disposée coaxialement au bout d'arbre d'entraînement intérieure (14) et recouvre celle-ci en forme de pot,
**caractérisé en ce que**
l'embrayage (16) est disposé radialement à l'extérieur au-dessus du bout d'arbre d'entraînement (14) et au-dessus du bout d'arbre de raccordement (12).

2. Groupe hydraulique selon la revendication précédente, dans lequel l'embrayage (16) est conçu pour être actionné hydrauliquement.

3. Groupe hydraulique selon l'une quelconque des revendications précédentes, dans lequel l'embrayage (16) comprend un dispositif de précontrainte (26) autonome en énergie pour précontraindre l'embrayage (16) dans la position accouplée et un actionneur (27) pour amener l'embrayage (16) dans la position désaccouplée en opposition à la précontrainte du dispositif de précontrainte (26).

4. Groupe hydraulique selon l'une quelconque des revendications précédentes, dans lequel l'arbre d'entraînement (11) comprend un canal d'alimentation (28) pour l'alimentation en huile hydraulique pour la commutation hydraulique de l'embrayage (16).

5. Groupe hydraulique selon l'une quelconque des revendications précédentes, dans lequel l'arbre d'entraînement (11) comporte un bout d'arbre d'entraînement intérieur (14) relié de manière solidaire en rotation au convertisseur hydraulique (10) et disposé à l'intérieur du boîtier (8), qui peut être relié de manière amovible et solidaire en rotation au bout d'arbre de raccordement (12) par l'embrayage (16).

6. Groupe hydraulique selon l'une quelconque des revendications précédentes, dans lequel le boîtier (8) comprend, en plus de la chambre d'embrayage (17), une chambre de convertisseur (20) dans laquelle est logé le convertisseur hydraulique (10), les chambres de convertisseur et d'embrayage (20, 17) étant séparées l'une de l'autre par au moins une paroi de boîtier (21).

7. Groupe hydraulique selon l'une quelconque des revendications précédentes, dans lequel l'arbre d'entraînement (11) est monté à rotation sur le boîtier (8), un palier (15) étant prévu entre le convertisseur hydraulique (10) et l'embrayage (16).

8. Groupe hydraulique selon les deux revendications précédentes, dans lequel le palier (15) soutient l'arbre d'entraînement (11) contre la paroi de boîtier (21), qui sépare les chambres d'embrayage et de convertisseur (17, 20) l'une de l'autre.

9. Groupe hydraulique selon l'une quelconque des revendications précédentes, dans lequel l'embrayage (16) est conçu comme un embrayage multidisque.

10. Groupe hydraulique selon l'une quelconque des revendications 1 à 8, dans lequel l'embrayage (16) est conçu comme un embrayage à griffes.

11. Groupe hydraulique selon l'une quelconque des revendications précédentes, dans lequel l'embrayage (16) comprend deux parties d'embrayage (24, 25) qui sont supportées en rotation l'une par rapport à l'autre par un palier à roulement (23), un canal d'alimentation en lubrifiant (32) pour l'alimentation en lubrifiant du palier à roulement (23) étant guidé à travers l'arbre d'entraînement (11).

12. Groupe hydraulique selon la revendication précédente, dans lequel le bout d'arbre de raccordement (12) est monté à rotation sur le bout d'arbre d'entraînement intérieur (14) par ledit palier à roulement (23).

13. Groupe hydraulique selon l'une quelconque des revendications précédentes, dans lequel un dispositif de surveillance (38) est prévu pour surveiller la position de l'embrayage (16), le dispositif de surveillance (38) présentant de préférence un capteur de position (39) pour détecter la position d'une partie d'embrayage mobile (37) et/ou un capteur de pression (40) pour détecter une pression d'actionnement de l'embrayage et/ou étant conçu pour fonctionner de manière redondante.

14. Dispositif d'entraînement hydraulique comprenant au moins un groupe hydraulique (4) selon l'une quelconque des revendications précédentes, ainsi qu'en outre une boîte de transfert (2) à laquelle est raccordée ledit au moins un groupe hydraulique (4).
